# EUROPEAN PATENT APPLICATION

(11) **EP 1 464 693 A2**
(43) Date of publication of application: **06.10.2004**
(21) Application number: 04251993.4
(22) Date of filing: 01.04.2004
(51) Int. Cl.: C10L 3/00, H01M 8/02

(54) **Fuel cell leak detection**

(30) Priority: 01.04.2003 US 405144
(71) Applicant: Hewlett-Packard Development Company, L.P., Houston, TX 77070 (US)
(72) Inventor: Herman, Gregory S., Albany, OR 97321 (US); Punsalan, David, Eugene, OR 97401 (US); Ulmer, Kurt, Corvallis, OR 97330 (US); Mardilovich, Peter, Corvallis, OR 97330 (US)
(74) Representative: Tollett, Ian

(57) **Abstract**

Methods and systems of facilitating detection of fuel leaks in a fuel cell system (100) include adding organic molecules to a fuel cell (104) fuel supply (114, 214) to odorize the fuel supply.

## Description

The present invention relates to a method for facilitating detection of fuel leaks in a fuel cell system, and to fuel cell apparatus.

Fuel cells conduct an electrochemical reaction to produce electrical power. The typical fuel cell reactants are a fuel source such as hydrogen or a hydrocarbon, and an oxidant such as air. Fuel cells provide a DC (direct current) that may be used to power motors, lights, or any number of electrical appliances. There are several different types of fuel cells, each using a different chemistry.

Fuel cells typically include three basic elements: an anode, a cathode, and an electrolyte. Usually the anode and cathode are sandwiched around the electrolyte. The electrolyte prohibits the passage of electrons. Fuel cells are usually classified by the type of electrolyte used. The fuel cell types are generally categorized into, but not limited to, one of seven groups: proton exchange membrane (PEM) fuel cells, direct methanol fuel cells (DMFC), alkaline fuel cells (AFC), phosphoric-acid fuel cells (PAFC), solid oxide fuel cells (SOFC), molten carbonate fuel cells (MCFC), and molten hydride fuel cells (MHFC).

The anode and cathode are generally porous (although in the case of an MHFC the cathode can be a dense palladium film) and usually include an electrocatalyst, although each may have a different chemistry. Fuel migrates through the porous anode and an oxidant migrates through the porous cathode. The fuel and oxidant react to produce various charged particles, which include electrons at the anode. The electrons cannot pass through the electrolyte and therefore create an electrical current that can be directed to an external circuit. The cathode conducts the electrons back from the external circuit, where they recombine with various ions and oxygen and may form water and/or other byproducts. Often a number of fuel cells are arranged in a stack to provide a useful amount of electrical power.

Fuel for facilitating the fuel cell reaction is generally either self-contained or provided by a supply (such as a pipeline or large storage tank) that can present a continuous flow. Portable fuel cells typically include the self-contained fuel supplies or cartridges that may be refilled or replaced. Other fuel cells, such as large industrial fuel cells, are often connected to the larger storage tanks or pipelines that can provide a continuous flow. However, with both self-contained and continuous flow fuel supplies, it is currently very difficult to detect leaks. Most of the fuels used for fuel cells are colorless and odorless. Therefore, unless a local gas sampling and detection system is utilized, it is unlikely that fuel leaks in fuel cell applications will be noticed. Undetected fuel leaks may lead to hazardous conditions and result in inefficient fuel cell operation.

Some fuel cells, such as the SOFCs mentioned above, may receive fuel from public supplies, such as natural gas pipelines. Public gas supplies are odorized with sulfur compounds, which provide a strong and recognizable odor. Therefore, fuel cell system leaks may be easily detected when connected to public natural gas supplies. However, sulfur poisons most fuel cell anodes and gas reformers (that may be used, for example, with SOFCs), eventually rendering them ineffective. There has been some use of complicated sulfur-removal systems to "clean" the fuel prior to reaching fuel cell anodes, but such systems tend to add cost, complexity, weight, volume, and reduce fuel pressure. When sulfur-removal systems are used, a sulfur collection system is also required for the sulfur compounds that are removed from the fuel stream. In addition, many fuel cells are not operable with public fuel supplies such as natural gas.

In one of many possible embodiments, the present invention provides methods and systems for facilitating detection of fuel leaks in a fuel cell system including adding organic molecules to a fuel cell fuel supply to odorize the fuel supply.

The accompanying drawings illustrate various embodiments of the present invention and are a part of the specification. The illustrated embodiments are merely examples of the present invention and do not limit the scope of the invention.

FIG. 1 is a dual chamber fuel cell system with a self-contained fuel supply that may be used with embodiments of the present invention.

FIG. 2 is a dual chamber fuel cell system with a continuous fuel supply that may be used with embodiments of the present invention.

FIG. 3 is a single chamber fuel cell system with a self-contained fuel supply that may be used with embodiments of the present invention.

FIG. 4 is a single chamber fuel cell system with a continuous fuel supply that may be used with embodiments of the present invention.

FIG. 5 is a single chamber fuel cell system with a self-contained fuel supply and a gas sensor that may be used with embodiments of the present invention.

Throughout the drawings, identical reference numbers designate similar, but not necessarily identical, elements.

The present specification describes systems and techniques for detecting fuel leaks in a fuel cell system, preferably by adding an odorant to a fuel cell fuel supply. As used in this specification and the appended claims, the term "odorant" is used broadly to mean any substance detectable by a human sense of smell when it is released to atmosphere. An "odorant" may also indicate a substance readily detectable by a sensor. Preferably, the odorant is detectable below a lower flammability limit of any fuel to which the odorant is added. The term "fuel cell" is also used broadly to mean any electrochemical cell in which the energy of a reaction between a fuel and an oxidant is converted directly into electrical energy. Therefore, the term "fuel cell" applies to at least all the types mentioned above in the background and other types known to those skilled in the art.

The odorant used for leak detection in the fuel cell fuel supply may be chosen from a number of substances. Preferably, the odorant includes organic molecules that can be added to the fuel supply of a fuel cell system at concentrations that are detectable to humans in the event of a fuel leak. A leak includes any loss of containment of the fuel in the fuel supply (other than a normal flow to the fuel cell), such as a leak to atmosphere.

Further, the organic molecules may include elements or compounds that are consumable or at least partially consumable by the fuel cell. That is, the organic molecules may react at fuel cell anodes to provide more electricity as part of the normal fuel cell operation. Accordingly, the organic molecules change and do not emit a detectable odor after forming products that exhaust from the fuel cell housing (102). Further, it should be noted that the odorant is preferably non-toxic, or at least has a detectable odor below a toxicity level.

Several different sets of organic molecules may be used to odorize a fuel cell fuel supply. For example, compounds including aromatics, furanones, and dienes may all function as odorants at various concentration levels. Aromatic compounds, furanones, and dienes are each discussed below in further detail.

Aromatic compounds are known to have strong odors. These organic compounds have atoms of carbon, hydrogen, oxygen, and sometimes nitrogen. Each carbon atom typically includes one or more attached hydrogen atoms, and the hydrogen atoms may be consumed in the fuel cell reaction. Thus, aromatic compounds may function both as an odorant and as a source of energy for the fuel cell.

Aromatic compounds include subgroups that may provide useful odorants. The subgroups that may be used include, but are not limited to: aldehydes, ketones, esters, and carboxylic acids. Each of these subgroups is discussed individually in the paragraphs that follow.

Aldehydes are defined by any class of organic compounds that contain the carbonyl group, and in which the carbonyl group is bonded to at least one hydrogen atom. The general formula for an aldehyde is RCHO, where R is hydrogen or an alkyl or aryl group. Aldehydes are formed by partial oxidation of primary alcohols and form carboxylic acids when they are further oxidized. Low molecular weight aldehydes, e.g., formaldehyde and acetaldehyde, have sharp, unpleasant odors that may be particularly useful for a fuel supply odorant. Higher molecular weight aldehydes, e.g., benzaldehyde and furfural, have pleasant, often flowery, odors. While the higher molecular weight aldehydes may also be used to odorize the fuel cell fuel supplies, they may be less preferable than lower molecular weight aldehydes because the pleasant odors may be more easily dismissed. Other aldehydes that may be useful include ethanal, propanal, butanal, etc.

Ketones are any of a class of organic compounds that contain the carbonyl group, and in which the carbonyl group is bonded only to carbon atoms. The general formula for a ketone is RCOR', where R and R' are alkyl or aryl groups. Ketones may be prepared by several methods, including the oxidation of secondary alcohols and the destructive distillation of certain salts of organic acids. Ketones are related to the aldehydes but are less active chemically. Ketones may be further subdivided into allylic and benzyllic ketones. Allylic and benzyllic ketones that may be especially useful for odorizing fuel cell fuel supplies may include, but are not limited to: beta-damascenone, 1-octen-3-one (amyl vinyl ketone), ionone (alpha-, beta-mixture), p-methylacetophenone, and citrus sinensis. Each of these ketones have a relatively low odor threshold (2x10³- 5x10⁻³ ppb) and may be effectively used at low concentrations. The "odor threshold" is defined as the airborne concentration, usually in part per million (ppm) or parts per billion (ppb), at which an odor becomes noticeable. Other ketones such as acetone or other low molecular weight ketones have a much higher odor threshold. Acetone, for example, has an odor threshold of 50,000 ppm. Odor thresholds for other organic compounds can be readily found by those of skill in the art having the benefit of this disclosure.

Esters are defined as any one of a group of organic compounds with the general formula RCO₂R' (where R and R' are alkyl groups or aryl groups) that are formed by the reaction between an alcohol and an acid. For example, when ethanol and acetic acid react, ethyl acetate (an ester) and water are formed. This particular reaction is called esterification. One ester that may be especially useful as a fuel cell fuel odorant is methyl acetate. Methyl acetate is formed by the reaction between methanol and acetic acid, and smells sweet. Other esters that may be used include, but are not limited to butyl acetate, Ethyl butyrate, Methyl butyrate, ethyl 2-methylbutyrate, etc. Esters offer an advantage over some of the other organic molecules mentioned herein by providing an odorant with a low fuel cell anode-coking tendency.

Pyrazines are nitrogen heterocycle molecules. Methyl, ethyl, methoxy, isopropyl and isobutyl pyrazine derivatives have highly detectable odors. Pyrazines that may be especially useful as a fuel cell fuel odorant include, but are not limited to: 2-methoxy-3-sec-butyl-pyrazine and 2-ethoxy-3-methyl-pyrazine. 2-methoxy-3-sec-butyl-pyrazine has an odor threshold of 10⁻³ ppb, and 2-ethoxy-3-methyl-pyrazine has an odor threshold of 0.8 ppb.

As mentioned above, furanones are another class of organic molecules that may be used according to principles described herein to odorize a fuel cell fuel supply. Furanones can be derived from compounds found in Australian seaweed or synthesized/modified by various routes. Furanones that may be useful as odorants include, but are not limited to: 5-ethyl-3-hydroxy-4-methyl-2(5H)-furanone, 3-hydroxy-4,5-dimethyl-2(5H)-furanone (Sotolon), and 2,5-dimethyl-4-methoxy-3(2H)-furanone. Each of these furanones has a low odor threshold. The odor threshold for 5-ethyl-3-hydroxy-4-methyl-2(5H)-furanone is on the order of 10⁻⁴ ppb. The odor threshold for Sotolon is 10⁻³ ppb. And the odor threshold for 2,5-dimethyl-4-methoxy-3(2H)-furanone is 3x10⁻² ppb.

Dienes are organic molecules which contain two carbon-carbon double bonds. Dienes may be used according to some aspects of the principles described herein to odorize fuel cell fuel supplies as well. Dienes that may be particularly useful as odorants include, but are not limited to: (E,Z)-2,6-nonadienal, cis-6-nonenal, and p-methylacetophenone. The odor threshold for each of these three dienes is, respectively, 10⁻², 2x10⁻², and 3x10⁻² ppb.

While several organic compounds have been specifically noted above, any organic molecules may be used as an odorant according to the principles described herein. A concentration level of the odorants necessary to facilitate a detectable odor to the human sense of smell upon leaking from a fuel cell fuel supply may be readily found or calculated by those of skill in the art having the benefit of this disclosure.

As discussed above, preferably the odorant added to the fuel cell fuel supply is organic and will not include sulfur, which is poisonous to most fuel cell anodes. However, there may be some instances where sulfur content in an odorant is tolerable. Further, it is preferable, although not mandatory, that the organic odorant have a relatively low (on the order of 10 ppb or less) odor threshold.

The odorants described herein may be used for any fuel cell system, including systems using each of the fuel cell types mentioned in the background. Particular embodiments of fuel cell applications that may incorporate the odorants are described with reference to the figures below. The embodiments shown include portable fuel cell systems that include self-contained fuel supplies or cartridges, stationary fuel cell systems that are often connected to large storage tanks or pipelines that can provide a continuous flow, single chamber fuel cell systems, and dual chamber fuel cell systems. However, other fuel cell systems may also incorporate the principles descried herein, and the selected embodiments being described are only exemplary in nature.

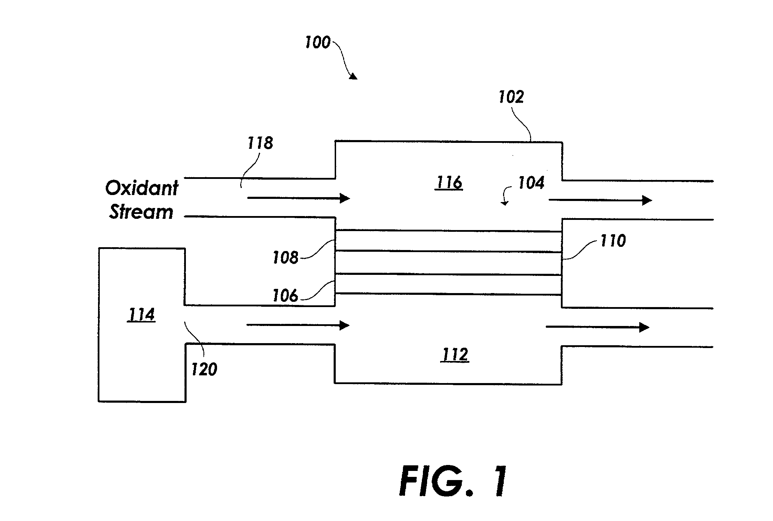

Referring now to the figures, and in particular FIG. 1, one portable fuel cell system (100) is described. In the fuel cell system (100) of FIG. 1, a housing (102) contains a single fuel cell (104). Of course it will be understood that the fuel cell system (100) may include multiple fuel cells (104) arranged in a stack. Thus, the fuel cell (104) may be single fuel cell or a number of fuel cells operating as a unit.

Each fuel cell (104) includes an anode (106), a cathode (108), and an electrolyte (110) sandwiched between the anode (106) and the cathode (108). The electrolyte (110) may include a solid oxide membrane, a polymer membrane, or other membrane used for other fuel cell types. It will be understood, however, that the fuel cell system (100) is not limited to the anode/electrolyte/cathode sandwich configuration shown. Other fuel cell systems, for example porous supports and current collector supported systems may also be used.

The anode (106) and cathode (108) may include current collection layers and therefore also function as current collectors as the electrochemical reaction of the fuel cell takes place. Current generated by the fuel cell (104) may be directed to an external circuit to do useful work.

According to the design shown in FIG. 1, the fuel cell (104) separates the interior of the housing (102) into two chambers. A first of the two chambers is a fuel chamber (112) that is open to the anode (106) of the fuel cell (104). A second of the two chambers is an oxidant chamber (116) that is open to the cathode (108) of the fuel cell. The fuel chamber (112) is in fluid communication with a self-contained fuel supply (114) of the fuel cell system (100), and the oxidant chamber (116) receives oxygen from air or another oxidant source via an oxidant stream (118). The self-contained fuel supply (114) may be a replaceable or refillable cartridge including a port (120) for engagement with the fuel cell (104) or fuel cell housing (102). By including the self-contained fuel supply (114), the portable fuel cell system (100) can be moved independently from place to place.

The self-contained fuel supply (114) may house any of a number of various fuels for introduction to the anode (106) of the fuel cell (104). The type of fuel depends on the fuel cell type. For example, if the fuel cell (104) is a solid oxide fuel cell, the fuel may be hydrogen, hydrocarbons, or alcohols. However, if the fuel cell (104) is a direct methanol fuel cell, the fuel may be methanol.

In addition to containing a fuel, the self-contained fuel supply (114) also includes one of the odorants described above. The odorant is added or injected into the self-contained fuel supply (114) as a leak indicator. It may be desirable, especially with portable fuel cell systems that may operate in confined spaces, to receive immediate notice of any fuel leaks. In the event of a leak, the odorant provides such notice to humans local to the fuel cell system (100). Accordingly, the odorant may be added to the self-contained fuel supply (114) before, after, or at the same time the fuel is added.

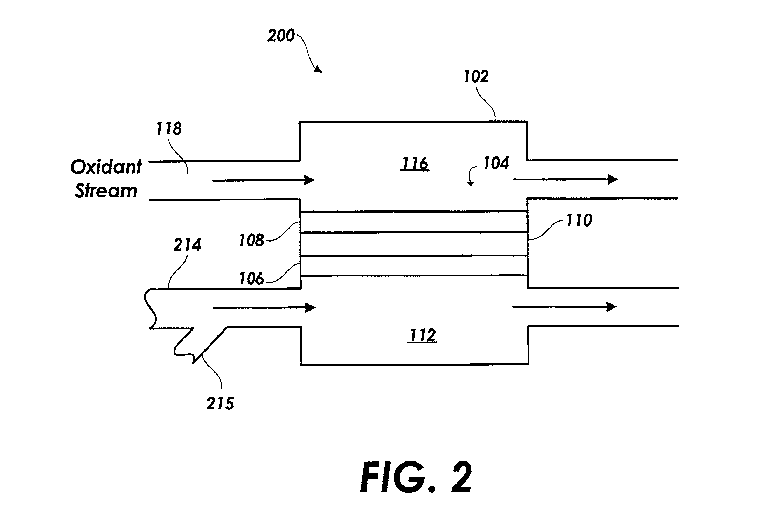

A continuous fuel supply may also incorporate the principles described herein as shown in FIG. 2. According to the design shown in FIG. 2, a stationary fuel cell system (200) is shown with the same dual chamber design shown in FIG. 1. However, instead of the self-contained fuel supply (114, FIG. 1), the stationary fuel cell system (200) is in fluid communication with a continuous supply of fuel via a supply line (214). The supply line (214) provides odorized fuel to the fuel cell (104). The fuel may be odorized in one or more ways described below.

According to the embodiment of FIG. 2, the supply line (214) has a fitting (215) disposed therein. The fitting (215) enables any of the odorants mentioned above to be added to the fuel prior to introduction into the fuel cell housing (102) while the fuel cell (104) is in operation. The fitting (215) is shown just upstream of the fuel chamber (112). However, the fitting (215) may be disposed at any point along the supply line (214), or in the fuel cell housing (102) itself, and is not necessarily located in the position shown. As with the embodiment of FIG. 1, the addition of an odorant to the stationary fuel cell system (200) facilitates leak detection in the event of an actual leak.

In addition to adding the odorant to the supply line (214) via the fitting (215), the odorant may also be added at a fuel production source, eliminating the need for the fitting (215). Further, it will be understood that the principles described herein may be applied to any fuel cell fuel source by adding an odorant, preferably an organic odorant.

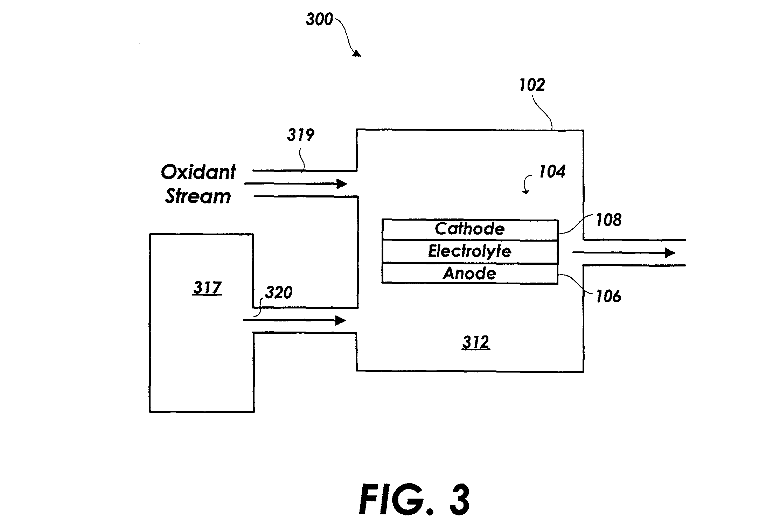

Referring next to FIG. 3, a second portable fuel cell system (300) is shown. According to the design shown in FIG. 3, there is only a single chamber (312) disposed around the fuel cell (104). The single chamber (312) is in fluid communication with a self-contained fuel supply (317) of the fuel cell system (300) that is similar or identical to the self-contained fuel supply (117) of FIG. 1. As such, the self-contained fuel supply (317) may be a replaceable or refillable cartridge including a port (320) for engagement with the fuel cell (104) or the fuel cell housing (102).

Similar to the description above with reference to FIG. 1, the self-contained fuel supply (317) of FIG. 3 may house any of a number of various fuels for supply to the anode (106) of the fuel cell (104). And in addition to containing a fuel, the self-contained fuel supply (317) also includes the one or more of the odorants described above. Accordingly, FIG. 3 illustrates that a single chamber fuel cell system may also be used with an odorant to facilitate leak detection according to the principles described herein.

An oxidant stream (319) may also be coupled to the fuel cell housing (102) as shown to provide an oxidant to the cathode (108). Alternatively, the self-contained fuel supply (317) of FIG. 3 may optionally include an oxidant to create a gas mixture within the self-contained fuel supply (317) of fuel, odorant, and oxidant. In such an embodiment, the oxidant stream (319) would be omitted and the anode (106) may include materials that limit reaction to a fuel portion of the mixture or to fuel and odorant portions of the mixture, while the cathode (108) may include materials that will only react with the oxidant portion of the mixture.

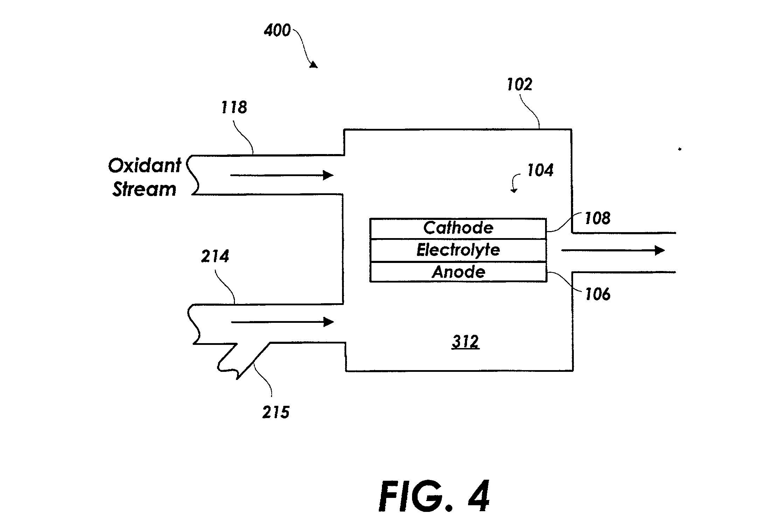

Likewise, a continuous fuel supply coupled with a single chamber fuel cell system may also incorporate the principles described herein. According to the design shown in FIG. 4, a single chamber stationary fuel cell system (400) is in fluid communication with a continuous supply of fuel via the supply line (214) and oxidant via the oxidant stream (118). Similar or identical to the embodiment shown in FIG. 2, the supply line (214) provides odorized fuel to the fuel cell (104). The fuel may be odorized via the fitting (215) in the same ways described above with reference to the embodiments of FIGs. 1-2.

The injection of odorants into fuel cell systems, particularly organic molecules that can also act as sources of fuel, provides a leak detection mechanism without the need for any specialized anodes that are sulfur-tolerant. The choices of organic molecules that may be advantageously used are wide and varied as discussed above. The present specification contemplates the use of any organic odorant for any fuel cell system to facilitate leak detection.

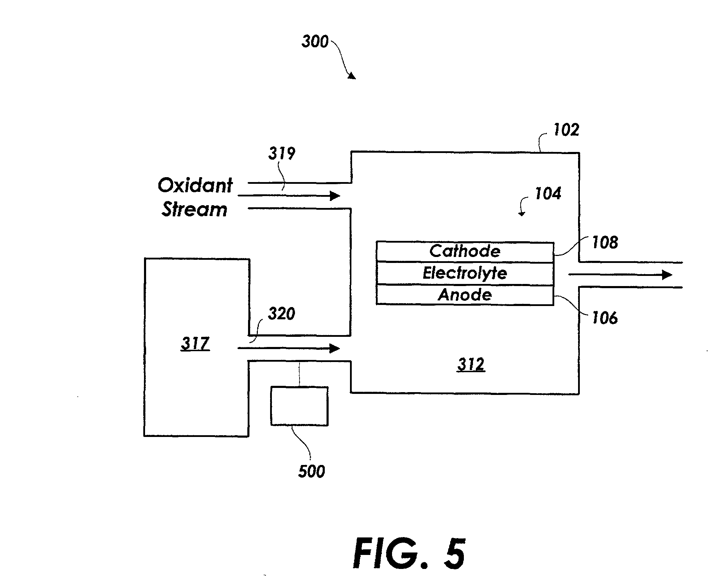

In addition to the use of organic molecules as odorants detectable by humans, the organic odorants may also be used in combination with a sensor (500) designed to sense the presence of specified organic compounds as shown in FIG. 5. The sensor (500) may be coupled to the fuel supply (317), the fuel cell housing (102), or some other component of the fuel cell system (300). The sensor (500) may be located in proximity to the self-contained fuel supply (300) (if there is one, other embodiments may not have a self-contained fuel supply), the fuel cell housing (102), or both, enabling the sensor (500) to quickly detect any leaks. The sensor (500) may also include circuitry programmed to shut down the fuel cell system (300) in the event of a detected leak. The addition of the sensor (500) may facilitate use of organic odorants at very low concentrations that are not detectable by humans. Furthermore, the organic odorant molecule can be chosen so that extremely high sensitivity and selectivity of the sensor is realized to avoid false alarms. An example of a sensor (500) for detecting organic molecules is available from Airsense Analytics in Germany or other sources.

The preceding description has been presented only to illustrate and describe embodiments of invention. It is not intended to be exhaustive or to limit the invention to any precise form disclosed. Many modifications and variations are possible in light of the above teaching. The principles of the invention, including adding odorants to fuel cell fuel supplies, may be adapted to any fuel cell configuration. It is intended that the scope of the invention be defined by the following claims.

## Claims

1. A method of facilitating detection of fuel leaks in a fuel cell system (100) comprising adding organic molecules to a fuel cell fuel supply to odorize said fuel supply.

2. The method of claim 1, wherein said organic molecules comprise aromatic compounds.

3. The method of claim 2, wherein said aromatic compounds comprise one or more of:
aldehydes, ketones, esters, and pyrazines.

4. The method of claim 1, wherein said organic molecules comprise compounds having low odor thresholds.

5. The method of claim 4, wherein said compounds comprise one or more of:
butyl acetate, ethyl butyrate, methyl butyrate, and ethyl 2-methylbutyrate.

6. The method of claim 1, wherein said organic molecules comprise furanones.

7. The method of claim 1, wherein said organic molecules comprise dienes.

8. The method of any preceding claim, wherein said adding organic molecules further comprises injecting said organic molecules into a contained fuel supply (114) prior to fuel cell (104) operation.

9. The method of any of claims 1 to 7, wherein said adding organic molecules further comprises injecting said organic molecules to a fuel stream (214) during fuel system (200) operation.

10. A fuel cell apparatus comprising:
an anode (106);
a cathode (108);
an electrolyte (110) disposed adjacent said anode (106), said cathode (108), or between said anode (106) and said cathode (108); and
a fuel supply odorized with organic molecules coupled to said anode (106).
